# DEMANDE DE BREVET EUROPEEN

(11) **EP 0 774 334 A1**
(43) Date de publication de la demande: **21.05.1997**
(21) Numéro de dépôt: 96490039.3
(22) Date de dépôt: 15.10.1996
(51) Int. Cl.: B29C 45/14

(54) **Procédé de fixation d'une pièce plastique sur une toile enduite**

(30) Priorité: 20.11.1995 FR 9513981
(71) Demandeur: Ditechna, Sarl, 59640 Dunkerque (FR)
(72) Inventeur: Peckeu, Simone, 59640 Dunkerque (FR); Glepin, Daniel, 62100 Calais (FR); Dupas, Christian, 59123 Bray Dunes (FR)
(74) Mandataire: Ecrepont, Robert

(57) **Abrégé**

L'invention se rapporte à un procédé de fixation d'une pièce plastique sur une toile enduite.

Il est caractérisé en ce que :
- on perce le tissu de manière à y aménager au moins une découpe pour permettre le passage de la matière plastique injectée au niveau de chaque demi-coquille et,
- pour une zone (19) de recouvrement du tissu enduit (4) par la pièce plastique (9, 10) et qui s'étend sur vingt cinq millimètres de largeur et sur quinze millimètres depuis le bord, les découpes sont au nombre de deux, d'un diamètre de l'ordre de trois millimètres et le centre de chaque découpe se situe à environ six millimètres du bord du tissu enduit et à environ six millimètres de l'axe médian perpendiculaire au bord précité.

## Description

L'invention se rapporte à un procédé de fixation d'une pièce plastique sur une toile enduite.

Elle se rapporte également à la toile enduite pourvue d'au moins une pièce plastique fixée selon le procédé précité.

L'invention trouve plus particulièrement mais non exclusivement application dans la réalisation des dispositifs de fixation des bâches sur des arceaux de soutien.

Les bâches utilisées notamment sur les véhicules de transport sont en tissu enduit sur les deux faces.

Pour l'enduction de ces tissus, on utilise du PVC dont les avantages sont bien connus car il permet, notamment, d'obtenir des surfaces lisses qui facilitent l'écoulement de la pluie.

Pour le maintien de ces bâches sur les véhicules, celles-ci doivent être pourvues de moyens de fixation.

Par exemple, les bords de celles-ci sont équipés d'oeillets rivés permettant d'y introduire un lien.

Ce type de fixation ne convient cependant pas pour la fixation de la bâche sur les arceaux qui la supportent.

Pour réaliser cette fixation, la face de la bâche tournée vers l'intérieur du véhicule porte des manchettes qui viennent ceindre localement l'arceau.

Chaque manchette est constituée d'un flanc de matériau globalement rectangulaire comprenant, à distance prédéterminée de deux de ses bords parallèles, des moyens de maintien de ces bords l'un par rapport à l'autre, cette manchette étant, par une zone intermédiaire à ces deux bords, fixée sur la bâche par collage ou soudure.

Sur les bâches connues, les moyens de maintien comprennent :
- d'une part, fixées, sur l'un des deux bords de la manchette, des pièces métalliques formant des anneaux qui peuvent être engagées dans des découpes que présente, à cet effet, l'autre bord de la manchette et,
- d'autre part, une pièce de verrouillage qui, après introduction des anneaux dans les découpes précitées, doit être glissée dans au moins l'un des anneaux des pièces métalliques pour empêcher ceux-ci de se dégager de leur découpe.

Cette pièce de verrouillage est généralement commune à l'ensemble des manchettes et se présente sous la forme d'une sangle.

Si ce mode de fixation ne présente aucune difficulté de fabrication, il n'est pas toujours aisé de glisser la sangle dans les anneaux, notamment lorsque la hauteur des arceaux est importante.

C'est notamment le cas des bâches équipant -les wagons, aussi dans de tels cas, il peut arriver que la manchette et donc la bâche ne soient pas correctement verrouillées.

Pour attacher les deux extrémités d'une sangle, on connaît des boucles dites à ouverture rapide constituées de deux pièces plastiques complémentaires comprenant une partie mâle présentant en sa partie frontale un doigt central de guidage et deux doigts latéraux d'accrochage et une partie femelle dans laquelle s'engage le doigt de centrage et les doigts d'accrochage qui, en fin de course, s'écartent élastiquement pour s'auto-verrouiller dans des logements latéraux de la pièce femelle.

Chacune de ces pièces mâle et femelle présente en outre des moyens pour son association avec la sangle qu'elle équipe, ces moyens consistant essentiellement en au moins une fenêtre à l'intérieur de laquelle la sangle est introduite pour être repliée sur elle-même, puis généralement cousue.

Ces moyens de maintien sont très pratiques mais leurs moyens d'association ne conviennent pas pour une utilisation avec des manchettes.

Se pose donc le problème de leur fixation sur ces manchettes et, notamment, de leur fixation sur un tissu enduit.

Certes, pour fixer une pièce plastique sur un support de même nature, on connaît la technique du surmoulage.

Par exemple, il est connu (FR-A-2.674.178) de fixer une barrette plastique sur une toile en matériau plastique.

Selon cette technique, la matière constituant la barrette plastique étant identique à celle recouvrant la toile, lors de l'injection de la pièce surmoulée, la toile plastique fond superficiellement de sorte qu'il y a un mélange partiel de la matière plastique constituant la toile et de celle utilisée pour la pièce plastique surmoulée.

On obtient ainsi un bon ancrage de la pièce surmoulée sur la toile.

Malheureusement, les boucles d'accrochage rapide sont réalisées dans des matières plastiques différentes du PVC et notamment, font appel aux polyamides qui, outre une température de fusion différente de celle du PVC, ne peuvent se mélanger avec lui, même partiellement, lors de l'injection.

En conséquence, la liaison entre la pièce plastique et le tissu enduit de PVC n'est pas suffisamment tenace.

Un des résultats que l'invention vise à obtenir est un procédé du type évoqué plus haut, en vue du surmoulage d'une pièce plastique sur un tissu enduit, qui remédie aux inconvénients précités.

A cet effet, l'invention a pour objet un tel procédé de fixation comprenant :
- une étape de positionnement d'un tissu enduit entre les deux coquilles complémentaires d'un moule d'injection,
- une étape d'injection d'une matière plastique et,
- une étape de refroidissement de la pièce plastique surmoulée,
ce procédé étant notamment caractérisé en ce que :
- avant moulage, dans la zone du tissu enduit recouverte par la pièce plastique surmoulée, on perce le tissu de manière à y aménager au moins une découpe pour permettre le passage de la matière plastique injectée au niveau de chaque demi-coquille et l'établissement d'un pont de matière entre les parties de la pièce plastique situées de chaque côté du tissu et
- pour une zone de recouvrement du tissu enduit par la pièce plastique et qui s'étend sur vingt cinq millimètres de largeur et sur quinze millimètres depuis le bord, les découpes sont au nombre de deux, d'un diamètre de l'ordre de trois millimètres et le centre de chaque découpe se situe à environ six millimètres du bord du tissu enduit et à environ six millimètres de l'axe médian perpendiculaire au bord précité.

L'invention sera bien comprise à l'aide de la description ci-après faite, à titre d'exemple non limitatif, en regard du dessin ci-annexé qui représente schématiquement :

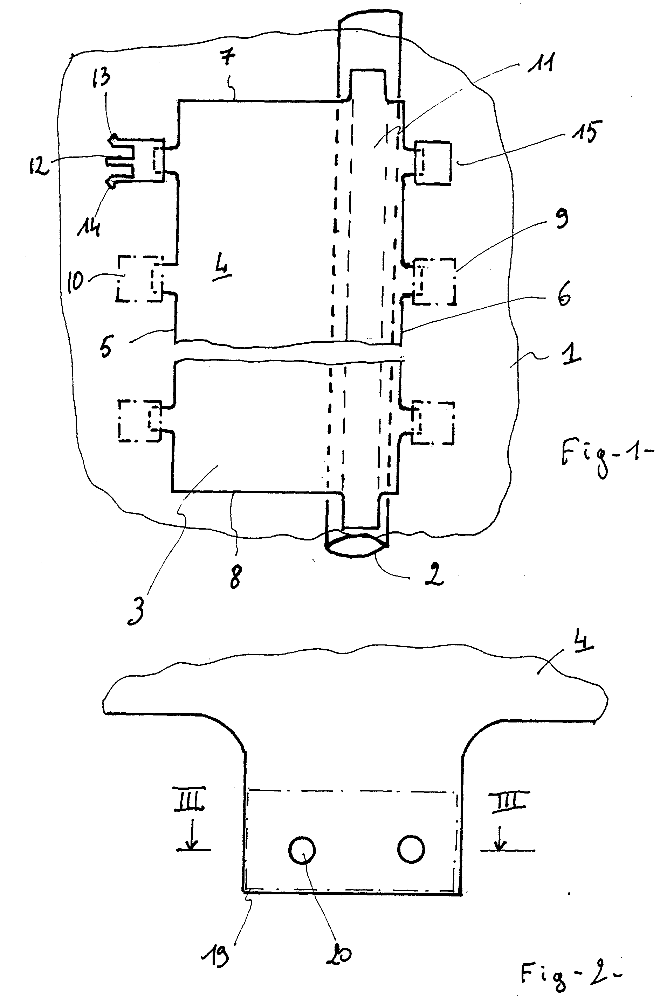

- figure 1 : la manchette développée,

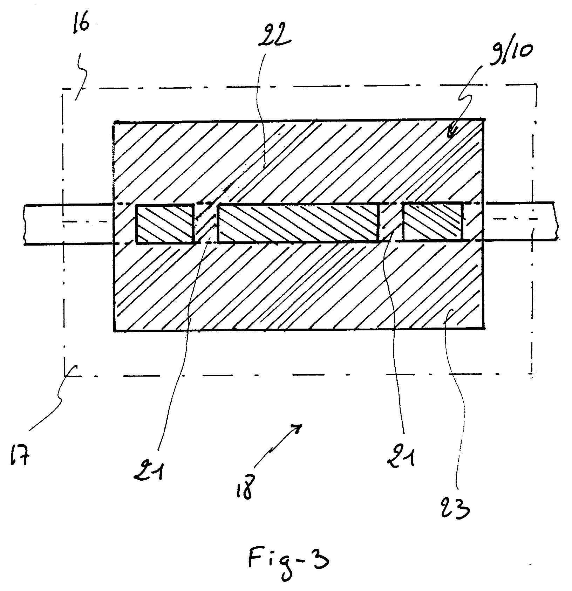

- figure 2 : un détail de la manchette,
- figure 3 : une coupe selon III III de la figure 2.

En se reportant au dessin, on voit que, pour fixer une bâche 1 sur les arceaux 2 d'un véhicule, on fait appel à des moyens 3 de fixation qui se présentent sous la forme de manchettes fixées sur la face interne de la bâche.

Chaque manchette est constituée d'un flanc 4 de tissu enduit globalement rectangulaire délimité par quatre bords 5,6,7,8.

Cette manchette comprend, à une distance prédéterminée de deux bords 5, 6 parallèles, des moyens 9, 10 de maintien.

Ces manchettes sont fixées sur la bâche, par exemple, à l'aide d'un adhésif approprié ou d'une soudure, dans une zone 11 de ces manchettes qui est intermédiaire aux deux bords parallèles précités 5, 6.

Ces moyens de maintien 9, 10 sont généralement constitués par des pièces plastiques complémentaires mâle 10 et femelle 9 surmoulées sur le tissu enduit 4.

La pièce mâle présente en sa partie frontale un doigt central de guidage 12 et deux doigts latéraux 13, 14 d'accrochage et la pièce femelle 9 présente une ouverture frontale 15 dans laquelle s'engagent le doigt de guidage et, élastiquement, les doigts d'accrochage qui, après engagement, coopèrent avec des butées de verrouillage.

Le procédé de fixation de chaque pièce plastique comprend :
- une étape de positionnement du tissu 4 entre les deux coquilles complémentaires 16, 17 d'un moule d'injection 18,
- une étape d'injection d'une matière plastique et,
- une étape de refroidissement de la pièce plastique surmoulée 9, 10.

Selon une caractéristique essentielle de l'invention :
- avant moulage, dans la zone 19 du tissu enduit 4 recouverte par la pièce plastique surmoulée 9, 10, on perce le tissu 4 de manière à y aménager au moins une découpe 20 pour permettre le passage de la matière plastique injectée au niveau de chaque demi-coquille et l'établissement d'un pont 21 de matière entre les parties 22, 23 de la pièce plastique 9, 10 situées de chaque côté du tissu et
- pour une zone 19 de recouvrement du tissu enduit 4 par la pièce plastique 9, 10 et qui s'étend sur vingt cinq millimètres de largeur et sur quinze millimètres depuis le bord, les découpes sont au nombre de deux, d'un diamètre de l'ordre de trois millimètres et le centre de chaque découpe se situe à environ six millimètres du bord du tissu enduit et à environ six millimètres de l'axe médian perpendiculaire au bord précité.

La section des découpes 20 est sensiblement égale à la section minimale nécessaire au fluage de la matière injectée.

La taille des découpes et la position de ces découpes sont des caractéristiques importantes car tout en procurant une bonne résistance à la traction, on minimise l'affaiblissement de la toile.

L'invention vise également la toile obtenue selon ce procédé qui comprend un flanc de tissu enduit 4 présentant au moins, sur l'un de ses bords, une pièce plastique 9, 10 surmoulée et ancrée.

Selon l'invention, le tissu enduit 4 présente, dans la zone recouverte par la pièce plastique surmoulée 9, 10, au moins une découpe 20 permettant le passage de la matière plastique lors de l'injection de la pièce surmoulée et, la pièce plastique 9, 10 comprend au moins un pont 21 de matière plastique traversant le tissu enduit 4.

Selon l'invention, la taille de chaque découpe est sensiblement identique à la taille minimale nécessaire à l'écoulement de la matière injectée au travers de la dite découpe.

Selon une forme préférée de réalisation de l'invention, pour une zone 19 de recouvrement du tissu enduit 4 par la pièce plastique 9, 10 qui s'étendrait sur vingt cinq millimètres de largeur et sur quinze millimètres depuis le bord, les découpes seraient au nombre de deux, d'un diamètre de l'ordre de trois millimètres et le centre de chaque découpe se situerait d'une part à environ six millimètres du bord du tissu enduit et à environ six millimètres de l'axe médian perpendiculaire au bord précité.

Ces proportions préservent alors la résistance du tissu enduit tout en offrant un ancrage suffisant pour la pièce plastique.

## Revendications

1. Procédé de fixation d'une pièce plastique sur une toile enduite comprenant, à une distance prédéterminée de deux bords (5, 6) parallèles, des moyens (9, 10) de maintien constitués par des pièces plastiques complémentaires mâle (10) et femelle (9) surmoulées sur le tissu enduit (4),
ce procédé de fixation de chaque pièce plastique comprenant :
- une étape de positionnement du tissu (4) entre les deux coquilles complémentaires (16, 17) d'un moule d'injection (18),
- une étape d'injection d'une matière plastique et,
- une étape de refroidissement de la pièce plastique surmoulée (9, 10),
ce procédé étant notamment **CARACTERISE** en ce que :
- avant moulage, dans la zone (19) du tissu enduit (4) recouverte par la pièce plastique surmoulée (9, 10), on perce le tissu (4) de manière à y aménager au moins une découpe (20) pour permettre le passage de la matière plastique injectée au niveau de chaque demi-coquille et l'établissement d'un pont (21) de matière entre les parties (22, 23) de la pièce plastique (9, 10) situées de chaque côté du tissu et
- pour une zone (19) de recouvrement du tissu enduit (4) par la pièce plastique (9, 10) et qui s'étend sur vingt cinq millimètres de largeur et sur quinze millimètres depuis le bord, les découpes sont au nombre de deux, d'un diamètre de l'ordre de trois millimètres et le centre de chaque découpe se situe à environ six millimètres du bord du tissu enduit et à environ six millimètres de l'axe médian perpendiculaire au bord précité.

2. Toile enduite sur laquelle au moins une pièce plastique est fixée par le procédé selon la revendication 1 **caractérisée** en ce que le tissu enduit (4) présente, pour une zone (9) de recouvrement du tissu induit (4) par la pièce plastique (9, 10) qui s'étend sur vingt cinq millimètres de largeur et sur quinze millimètres depuis le bord, deux découpes qui sont d'un diamètre de l'ordre de trois millimètres et dont le centre de chaque découpe se situe à environ six millimètres du bord du tissu induit et à environ six millimètres de l'axe médian perpendiculaire au bord précité.
